# EUROPEAN PATENT SPECIFICATION

(11) **EP 2 802 756 B1**
(45) Date of publication and mention of the grant of the patent: **09.10.2019**
(21) Application number: 13701867.7
(22) Date of filing: 10.01.2013
(51) Int. Cl.: F02C 1/05, F02C 1/08, F02C 6/14

(54) **ELECTRICITY GENERATION DEVICE AND METHOD**
STROMERZEUGUNGSVORRICHTUNG UND -VERFAHREN
DISPOSITIF ET MÉTHODE DE PRODUCTION D'ÉLECTRICITÉ

(30) Priority: 13.01.2012 GB 201200548
(43) Date of publication of application: 19.11.2014
(73) Proprietor: Highview Enterprises Limited, London EC1Y 0TH (GB)
(72) Inventor: HARRIS, John Daniel Alastair, Surbiton Surrey KT5 8JJ (GB); MORGAN, Robert, Shoreham by Sea West Sussex BN43 6TH (GB); BRETT, Stephen Gareth, Spencer's Wood Reading RG7 1HT (GB)
(74) Representative: Carpmaels & Ransford LLP
(86) International application number: PCT/GB2013/050037
(87) International publication number: WO 2013/104904

(56) References cited:
- WO-A2-2007/028221
- US-A- 3 998 059
- US-B1- 7 047 744
- NAJJAR Y S H ET AL: "Cryogenic power conversion with regasification of LNG in a gas turbine plant", ENERGY CONVERSION AND MANAGEMENT, ELSEVIER SCIENCE PUBLISHERS, OXFORD, GB, vol. 34, no. 4, 1 April 1993 (1993-04-01), pages 273-280, XP025412993, ISSN: 0196-8904, DOI: 10.1016/0196-8904(93)90111-M [retrieved on 1993-04-01]

## Description

### Field of the Invention

The present invention relates to electricity generation devices and methods that use a cryogenic fluid such as liquid nitrogen or liquid air and a source of low grade waste heat, and means of increasing the efficiency of energy recovery from such devices.

### Background of the Invention

Electricity distribution networks (or grids) are often supported by a fleet of diesel generators and open cycle gas turbines that provide electricity during periods of high demand and emergency events such as the unexpected failure of a power station. Such generating assets, often referred to as peaking plant, burn fossil fuels at low efficiency and can be a significant source of atmospheric pollutants. The services provided by such peaking plant, include, but are not limited to:
- balancing differences in supply and demand at different times of the day and at short notice;
- providing electricity required to power the auxiliary equipment required for restart of a generating asset in the event of total network failure (black-start support);
- network reinforcement where parts of the electricity distribution network have a shortfall in capacity during periods of high power demand;
- injecting power into the network to support the frequency of the grid when demand for electricity increases rapidly.

In addition, the loss of power from the electricity distribution network can result in significant economic loss to some consumers, such as a data centre, or danger to personnel, for example in the event of a power failure at a hospital. Such applications often utilise diesel generators to provide standby electricity in the event of an interruption to the supply of electricity from the distribution network. Replacement of such diesel powered generators with a zero emissions device that uses a fuel from a sustainable source would be of benefit.

There is a need for a device that can provide a similar service but that uses a fuel that produces low or preferably zero atmospheric pollution that originates from a sustainable source.

The present inventors have realised that there is potential to generate electricity using the expansion of liquid air, liquid nitrogen or cryogen to drive a turbine to generate electricity. Such a device could provide a compact, reactive and environmentally clean solution to the problems of balancing network supply with demand.

WO 2007/096656 discloses a cryogenic energy storage system which exploits the temperature and phase differential between low temperature liquid air, liquid nitrogen or cryogen, and ambient air, or waste heat, to store energy at periods of low demand and/or excess production, allowing this stored energy to be released later to generate electricity during periods of high demand and/or constrained output. The system comprises a means for liquefying air during periods of low electricity demand, a means for storing the liquid air produced and an expansion turbine for expanding the liquid air. The expansion turbine is connected to a generator to generate electricity when required to meet shortfalls between supply and demand.

GB1100569.1 develops the power recovery element of WO 2007/096656 and discloses a device, the cryogenset, and method for the generation of zero emission electricity that uses a cryogenic fluid and a source of low grade waste heat, and can be used to provide load balancing and emergency support to an electricity distribution network, or back up power to a critical consumer such as a hospital or data centre. Referring to figure 1, the invention of GB1100569.1 utilises a cryogenic fluid, such as liquid nitrogen or liquid air, and a source of low grade waste heat 140 to power a turbo-generator. The emissions from the device are either gaseous nitrogen or gaseous air and present no environmental concerns. The cryogenic fluid is manufactured in an industrial refrigeration or air separation plant 100 using power from the grid 150 or from a renewable source 160 and supplied by tanker or pipeline 110 to the cryogenset 130 preferably via a storage tank 120.

A major constraint on the efficiency of such systems and devices is the poor utilisation of the thermal energy released from the cryogenic fluid during heating to ambient temperature. The exhaust of the cryogenset is only a few degrees above the temperature of the cryogenic fluid, and therefore significantly below ambient temperature. Ideally, the exhaust from the process would be much closer to ambient temperature due to more effective recovery of work from the process.

### Summary of the Invention

The inventors have discovered that further work can be extracted from the working fluid by the inclusion of additional power recovery cycles to the main open Rankine cycle described in GB1100569.1. The additional power recovery cycles combined with the main Rankine cycle exploit the temperature differences between ambient and the exhaust of the first Rankine cycle to extract more work from the working fluid. Several cycles can be included to progressively increase the final exhaust temperature to close to ambient. However, the efficiency of each additional cycle progressively reduces as the temperature difference between the hot and cold parts of the cycle reduces, thereby lowering the Carnot efficiency of each incremental additional cycle. In practice, one or two additional cycles would be applied as the cost - benefit of further cycles is marginal.

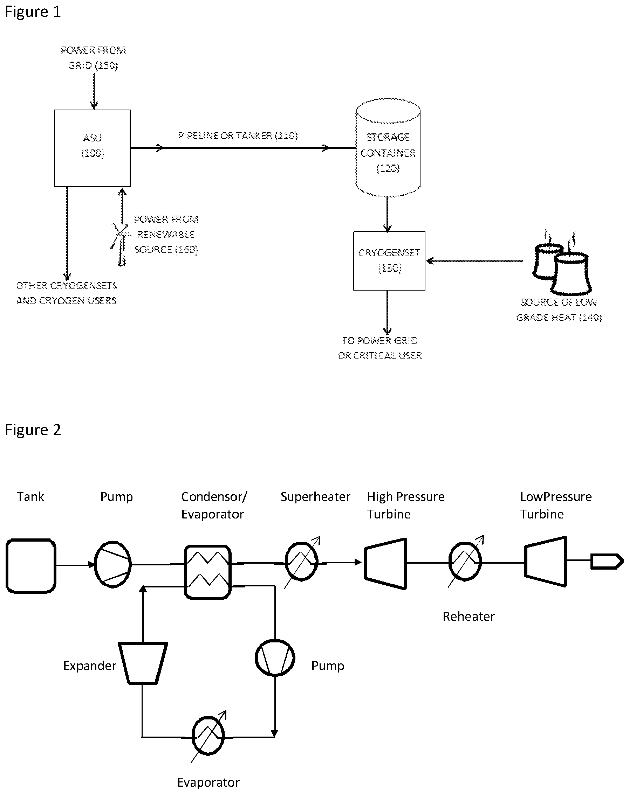

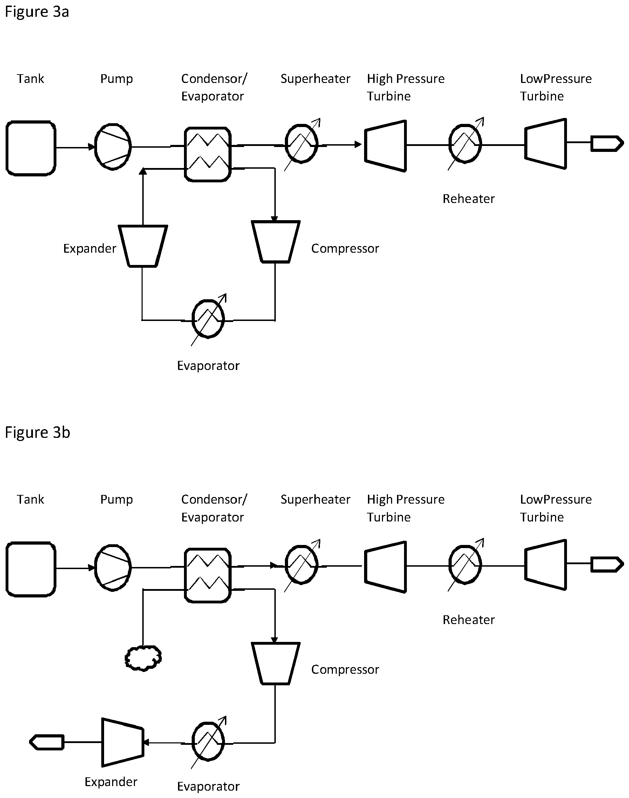

The approach is well known, and the so called 'topping' or 'bottoming' cycle is often applied to power generation devices. For example, a combined cycle gas turbine power station utilises an open Brayton cycle combined with a closed steam Rankine bottoming cycle. A cryogenset could be combined with a closed Rankine cycle utilizing a working fluid that condenses in the operating range between ambient and the temperature of the cryogen (see figure 2). Alternatively, an open or closed Brayton cycle could be used (see figures 3a and b).

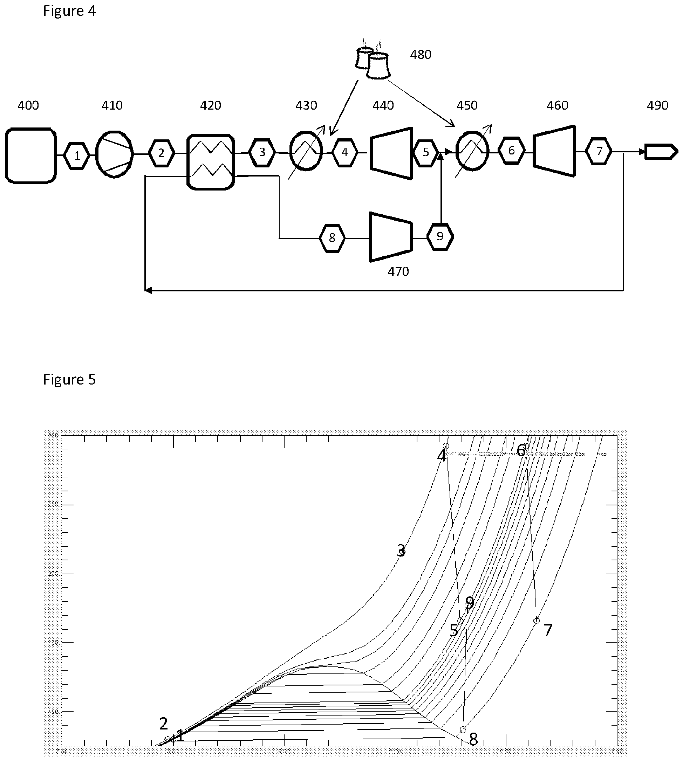

In most cases, different working fluids are used for the main and bottoming cycle, such as air and steam in the case mentioned above. The inventors have noticed that in the case of the cryogenset, a single working fluid can be used for both the main working fluid and bottoming cycle working fluid if an open Brayton cycle (such as that shown in figure 3b) is used as the bottoming cycle. This has the advantage of simplifying the design and reducing cost, an essential feature in the target market of reserve power. In the cycle of figure 3b, the inlet air to the Brayton bottoming cycle may be first passed through an air purification unit to remove water and carbon dioxide. Referring to figure 4, simplification of the design is achieved by combining the main working fluid and bottoming cycle working fluid at the inlet of the first or second expansion turbine.

The present invention provides an electricity generation device according to claim 1 and a method of generating electricity according to claim 10.

Consequently, the present invention combines a Rankine cycle with a Brayton cycle.

The compressor is generally driven by an electric motor or similar device.

One or both of the expansion turbines could be used to drive a generator to produce electricity from the rotational energy produced by expansion turbines.

The cryogenic fluid acts as the working fluid within the system.

With the arrangement of the present invention, the working fluid in the two cycles is the same. In addition, the mass flow of fluid through the second turbine is inherently greater than that through the first turbine.

The fluid pump compresses the cryogenic fluid to a high pressure of at least 50 bar and more typically over 100 bar.

The electricity generation device may further comprise a superheater for heating the high pressure working fluid output from the evaporator to a high temperature using a source of heat from a co-located process. The co-located source of heat may be from the ambient environment, from the atmosphere, the ground, river, sea or lake water or from a source of waste heat such as a power station, or industrial plant such as steel works or a data centre, or similar source of low grade waste heat, e.g. cooling water from a power station. The superheater may be positioned in the system between the evaporator and the first expansion turbine.

The combined flow of fluid that passes through the reheater is expanded to around ambient pressure in the second expansion turbine. The second expansion turbine comprises a low pressure turbine from which work is extracted.

The divided exhaust of the second low pressure expansion turbine releases part of the flow to ambient through the first exhaust and the remainder is circulated to the evaporator where the low pressure working fluid exchanges thermal energy with the cryogenic high pressure working fluid. The resulting low pressure and low temperature gas is compressed in the compressor before merging with the exhaust of the first high pressure expansion turbine.

The reheater reheats the working fluid exhausted from the first expansion turbine using a source of ambient or waste heat. The peak cycle temperature is driven by the available heating source. This can be from the ambient environment, from the atmosphere, the ground, river, sea or lake water or from a co-located process such as a power station, or industrial plant such as steel works or a data centre, or similar source of low grade waste heat.

The device may further comprise a third expansion turbine and a second reheater positioned between the evaporator and the first expansion turbine, and a fourth expansion turbine and a third reheater positioned between the first reheater and the second expansion turbine. In this case, the heated cryogen working fluid is expanded through two high pressure stages and two low pressure stages and the pressure is progressively reduced in the four stages, with interstage re-heating between each expansion stage. In this case, a superheater may be positioned between the evaporator and the third expansion turbine.

The device may further comprise a second compressor for compressing the second portion of working fluid after it has passed through the evaporator a first time and directing the second portion of working fluid back through the evaporator a second time before it is further compressed by the first compressor. In this arrangement, the second portion of the working fluid is first cooled in the evaporator and then compressed by the second, low pressure compressor before returning for further cooling in the evaporator and compression in the first, high pressure compressor. The additional compressor reduces the compressor work, by utilising interstage cooling.

The high pressure turbine stage, or stages, may be mounted on the same power shaft as the compressor, or compressors. This arrangement has the advantage of both higher efficiency and reduced cost, through reduced drive losses.

A device according to the present invention may be used as the power recovery component of a cryogenic energy storage system.

The device of the present invention has an improved cost/benefit trade off relative to the cryogenset described in GB1100569.1. Calculations by the inventors have indicated that a 20% or more improvement in specific work can be achieved for a less than 4% increase in equipment cost. In the storage market, the significant reduction in operating costs resulting from the improved efficiency of the present invention will be favourable for the modest increase in capital cost.

The present invention offers a number of significant advantages over the devices shown in figures 2, 3a and 3b. The advantages include:
1. Reduced part count and therefore cost. The present inventors have calculated that the cost increase of the present invention relative to the single cycle cryogenset of GB 1100569.1 is less than 4%, for a 20% improvement in efficiency. The designs shown in figures 2, 3a and 3b would be likely to incur cost increases of 20 to 40% for similar efficacy improvements.
2. Simplified fluid handling. The closed Rankine and Brayton cycles require separate fluid loops which lead to an associated complexity in preventing cross contamination of the fluids. The system of the present invention does not suffer from such complexity.

### Description of the Drawings

Embodiments of the present invention will now be described with reference to the figures in which:
Figure 1 shows the configuration of a cryogenset in relation to co-located sources of waste heat and the cryogen delivery options from a remote located air separation plant;
Figure 2 shows a cryogenset with a Rankine bottoming cycle;
Figure 3a shows a cryogenset with a closed Brayton bottoming cycle;
Figure 3b shows a cryogenset with an open Brayton bottoming cycle;
Figure 4 shows a first embodiment of an electricity generation device and method of the present invention with two turbine stages;
Figure 5 shows a temperature entropy diagram for the first embodiment of the invention shown in figure 4;
Figure 6 shows a second embodiment of an electricity generation device and method of the present invention with four turbine stages; and
Figure 7 shows a third embodiment of an electricity generation device and method of the present invention with four turbine stages and two compressor stages.

### Detailed Description of the Invention

A first embodiment of the present invention, shown in figure 4, consists of a cryogenic tank 400 from which a cryogenic, or working, fluid is transferred to a high pressure pump 410. The cryogenic fluid is compressed to a high pressure, of at least 50 bar and more typically over 100 bar. The high pressure fluid is then heated in a heat exchanger 420, referred to as an evaporator, where thermal energy is transferred between the cryogenic working fluid from the tank and low pressure working fluid in a Brayton loop of the combined cycle. Further heat is optionally added from a co-located source of waste heat 480, such as cooling water from a power station, in the superheater 430. The resulting high pressure fluid, which is now in the gaseous state if the pressure is below the critical pressure or in a liquid state if the temperature and pressure conditions are supercritical, is expanded through a first high pressure turbine 440, from which work is extracted. The exhaust from the high pressure turbine is combined with the discharge from the Brayton cycle loop compressor 470 and reheated using ambient or waste heat 480 in the reheater 450. The combined flow (Rankine loop and Brayton loop) is expanded to around ambient pressure in the low pressure turbine 460 from which work is extracted. The exhaust of the turbine is then divided, part of the flow is released to ambient through the exhaust 490 and the remainder is circulated to the evaporator 420 where the low pressure working fluid exchanges thermal energy with the cryogenic high pressure working fluid. The steady-state flow from the exhaust 490 is equal to the mass flow from the tank. The portion of the exhaust which is circulated to the evaporator 420 is a low pressure and low temperature gas which is compressed in the compressor 470 before merging with the exhaust of the high pressure turbine 440. The working fluid in the Rankine loop and the Brayton loop are inherently the same.

The cycle is represented on a temperature-entropy diagram in figure 5, where the state numbers shown on the diagram of figure 5 correspond to the numbered positions shown in hexagons in figure 4.

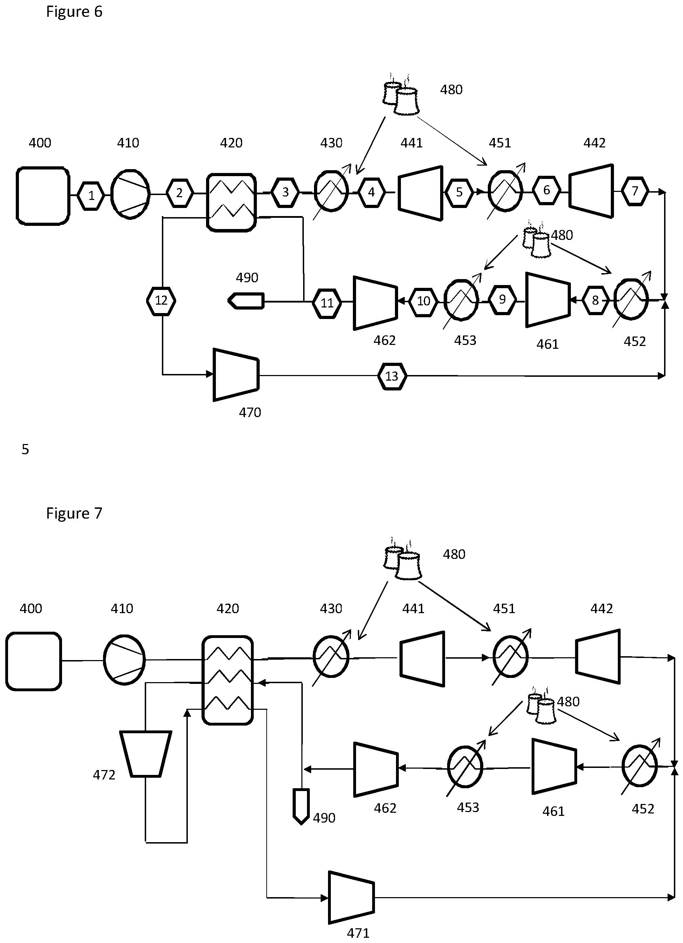

In a second, preferred embodiment of the invention, shown in figure 6, two additional turbine stages are added to the process to improve the work recovery from the working fluid. The inventors have found a significantly improved performance is achieved by expanding the heated cryogen working fluid through two high pressure stages 441 and 442 and two low pressure stages 461 and 462 where the pressure is progressively reduced in four stages, with interstage re-heating between each expansion stage. In this way, the expansion process is closer to the ideal isothermal case. The complete process is as follows: the cryogenic working fluid is first transferred from a tank 400 to a high pressure pump 410. The now high pressure fluid is then heated in an evaporator 420 where thermal energy is exchanged with a low pressure fluid in a Brayton loop. The high pressure warmed working fluid is then optionally further heated by waste heat or ambient heat in a superheater 430. The high pressure and high temperature working fluid is then expanded in a high pressure turbine 441, reheated in a re-heater 451 and expanded in a further high pressure turbine 442. The working fluid then combines with the high pressure feed from the Brayton loop and is heated in a further re-heater 452. The fluid is expanded in a low pressure turbine 461, is then re-heated in a further re-heater 453 and finally expanded in a further low pressure turbine stage 462. The exhaust of the final low pressure turbine is divided into a re-circulation flow and an exhaust flow 490. The re-circulation flow is first cooled in the evaporator 420 and then compressed in a compressor 470 before combining with the main working fluid flow upstream of the reheater 452. Typical temperatures, pressures and mass flows at various points around the cycle are shown in the following table (Table 1) and refer to the numbered positions shown in hexagons in figure 6:

| **Process Temperatures, Pressures and Flows** | | **Pressure** | **Temperature** | **Mass Flow** |
|---|---|---|---|---|
| | | **Bar abs** | **°C** | **Kg/s** |
| **1** | Storage Tank | 5.0 | -197 | 30 |
| **2** | Evaporator Inlet | 102 | -193 | 30 |
| **3** | Super-Heater Inlet | 101.5 | -57 | 30 |
| **4** | Stage 1 Turbine Inlet | 100 | 20 | 30 |
| **5** | Stage 1 Turbine Outlet | 31.6 | -54 | 30 |
| **6** | Stage 2 Turbine Inlet | 31.6 | 20 | 30 |
| **7** | Stage 2 Turbine Outlet | 10 | -53.9 | 30 |
| **8** | Stage 3 Turbine Inlet | 10 | 20 | 93.83 |
| **9** | Stage 3 Turbine Outlet | 3.32 | -51.26 | 93.83 |
| **10** | Stage 4 Turbine Inlet | 3.32 | 20 | 93.83 |
| **11** | Stage 4 Turbine Outlet | 1.1 | -51.37 | 93.83 |
| **12** | Compressor Inlet | 1 | -186 | 63.83 |
| **13** | Compressor Outlet | 10 | -96.03 | 63.83 |

It is noted that the conditions shown in table 1 refer to one example of the invention, operating at relatively low pressure (Stage 1 turbine inlet of 100 bar), in line with the operating pressures of readily available turbo-machinery. Analysis by the inventors has indicated better performance can be achieved at higher peak working fluid pressures should such equipment be available.

In another embodiment shown in figure 7, an additional compressor stage is added to the system to reduce the compressor work, by utilising interstage cooling. The low pressure Brayton loop working fluid is cooled in the evaporator 420 and first compressed by the low pressure compressor 472 before returning for further cooling in the evaporator and compression in the high pressure compressor 471. The compressor work is reduced by this design but at the expense of the complexity of an additional compressor stage.

In a further embodiment, which is not shown in the figures, the high pressure turbine stage 440 or stages 441 and 442, are mounted on the same power shaft as the compressor 470 or compressors 471 and 472. The inventors have discovered the power delivered by the high pressure turbine stages almost exactly matches the compressor power requirement at the optimal operating conditions. This embodiment has the advantage of both higher efficiency and reduced cost, through reduced drive losses through the deletion of the electric motor connected to the compressor and reducing the power output and therefore size of the generator connected to the turbines. Although the generator output is reduced in this embodiment, the net output of the system remains the same as the previous embodiment as the parasitic electrical load of the compressor motor is removed through directly driving the compressor by the high pressure turbines.

## Claims

1. An electricity generation device comprising:
a storage tank (400) for storing a cryogenic fluid,
a fluid pump (410) for compressing cryogenic fluid taken from the storage tank to a high pressure,
an evaporator (420) for evaporating the high pressure cryogenic fluid, to provide a high pressure gas,
a first expansion turbine (440, 442) for expanding the high pressure gas and extracting work from the high pressure gas;
a first reheater (450, 452) for reheating the gas exhausted from the first expansion turbine using heat from the ambient environment or waste heat;
a second expansion turbine (460, 462) for expanding the working fluid exhausted from the first reheater and extracting work from the working fluid exhausted from the first reheater; wherein
the second expansion turbine has an exhaust outlet which is split into first and second paths such that the working fluid exhausted from the second expansion turbine is divided into first and second portions, wherein the first portion of working fluid is directed along the first path to ambient through a first exhaust (490), and the second portion of working fluid is directed along the second path to an inlet of the evaporator such that the second portion of working fluid exchanges thermal energy with the high pressure cryogenic fluid within the evaporator; and
a first compressor (470) for compressing the second portion of working fluid after it has passed through the evaporator, wherein an exhaust outlet of the compressor is connected with an exhaust outlet of the first expansion turbine such that the second portion of working fluid and the gas exhausted from the first expansion turbine are combined and directed into the first reheater to be reheated using the heat from the ambient environment or waste heat,
a generator,
wherein at least one of the first and second expansion turbines is configured to drive said generator to produce electricity.

2. The device of claim 1 wherein the fluid pump is for compressing the cryogenic fluid to a pressure of at least 50 bar.

3. The device of any preceding claim, further comprising a superheater (430) for heating the high pressure working fluid output from the evaporator to a high temperature using a source of heat from a co-located process.

4. The device of claim 3, wherein the co-located source of heat is the ambient environment, the atmosphere, the ground, river, sea or lake water, or waste heat from a power station or industrial plant.

5. The device of any preceding claim, wherein the first expansion turbine is mounted on the same power shaft as the first compressor.

6. The device of any preceding claims, further comprising:
a third expansion turbine (441) and a second reheater (451) positioned between the evaporator and the first expansion turbine, and
a fourth expansion turbine (461) and a third reheater (453) positioned between the first reheater and the second expansion turbine.

7. The device of claim 6 wherein the first and third expansion turbines are mounted on the same power shaft as the first compressor

8. The device of claim 7, further comprising a second compressor (472) for compressing the second portion of working fluid after it has passed through the evaporator a first time and directing the second portion of working fluid back through the evaporator a second time before it is compressed by the first compressor, and optionally wherein the first and third expansion turbines are mounted on the same power shaft as the first and second compressors.

9. A cryogenic energy storage system having a power recovery component comprising the device of any preceding claim.

10. A method of generating electricity comprising:
storing a cryogenic fluid in a storage tank (400);
extracting the cryogenic fluid from the storage tank and compressing the cryogenic fluid to a high pressure using a fluid pump (410);
evaporating the high pressure cryogenic fluid in an evaporator (420) to provide a high pressure gas;
expanding the high pressure gas using a first expansion turbine (440) and extracting work from the high pressure gas;
reheating the gas exhausted from the first expansion turbine using a first reheater (450) and heat from the ambient environment or waste heat;
expanding the working fluid exhausted from the first reheater and extracting work from the working fluid exhausted from the first reheater using a second expansion turbine (460); wherein
the second expansion turbine has an exhaust outlet which is split into first and second paths such that the working fluid exhausted from the second expansion turbine is divided into first and second portions, wherein
the first portion of working fluid is directed along the first path to ambient through a first exhaust (490), and the second portion of working fluid is directed along the second path to an inlet of the evaporator such that the second portion of working fluid exchanges thermal energy with the high pressure cryogenic fluid within the evaporator;
using a first compressor (470) to compress the second portion of working fluid after it has passed through the evaporator, wherein an exhaust outlet of the compressor is connected with an exhaust outlet of the first expansion turbine such that the second portion of working fluid and the gas exhausted from the first expansion turbine are combined and directed into the first reheater to be reheated using the heat from the ambient environment or waste heat; and
using at least one of the first and second expansion turbines to drive a generator and produce electricity.

11. The method of claim 10, further comprising using a superheater (430) and a source of heat from a co-located process to heat the high pressure working fluid output from the evaporator to a high temperature.

12. The method of claim 10 or 11, further comprising:
expanding the high pressure gas using a third expansion turbine (441);
reheating the gas exhausted from the third expansion turbine using a second reheater (451); and
expanding the working fluid exhausted from the first reheater using a fourth expansion turbine; and
reheating the gas exhausted from the fourth expansion turbine using a third reheater.

13. The method of any of claims 10 to 12, further comprising using a second compressor to compress the second portion of working fluid after it has passed through the evaporator a first time and directing the second portion of working fluid back through the evaporator a second time before it is compressed by the first compressor.

## Patentansprüche

1. Vorrichtung zur Erzeugung von Elektrizität, umfassend:
einen Speichertank (400) zum Speichern eines kryogenen Fluids,
eine Fluidpumpe (410) zum Verdichten von kryogenem Fluid, das aus dem Speichertank entnommen wurde, auf einen hohen Druck,
einen Verdampfer (420) zum Verdampfen des unter hohem Druck stehenden kryogenen Fluids, um ein Hochdruckgas bereitzustellen,
eine erste Expansionsturbine (440, 442) zum Expandieren des Hochdruckgases und zum Extrahieren von Arbeit aus dem Hochdruckgas,
einen ersten Zwischenüberhitzer (450, 452) zum Zwischenüberhitzen des Gases, das aus der ersten Expansionsturbine ausgestoßen wird, unter Verwendung von Wärme aus der Umgebung oder aus Abwärme,
eine zweite Expansionsturbine (460, 462) zum Expandieren des Arbeitsfluids, das aus dem ersten Zwischenüberhitzer ausgestoßen wird, und zum Extrahieren von Arbeit aus dem Arbeitsfluid, das aus dem ersten Zwischenüberhitzer ausgestoßen wird, wobei
die zweite Expansionsturbine einen Ausstoßauslass aufweist, der in einen ersten und einen zweiten Weg unterteilt ist, sodass das Arbeitsfluid, das aus der zweiten Expansionsturbine ausgestoßen wird, in einen ersten und einen zweiten Anteil geteilt wird, wobei der erste Anteil des Arbeitsfluids entlang des ersten Weges durch einen ersten Ausstoßkanal (490) in die Umgebung geleitet wird und der zweite Anteil des Arbeitsfluids entlang des zweiten Weges zu einem Einlass des Verdampfers geleitet wird, sodass der zweite Anteil des Arbeitsfluids thermische Energie mit dem unter hohem Druck stehenden kryogenen Fluid in dem Verdampfer austauscht, und
einen ersten Verdichter (470) zum Verdichten des zweiten Anteils des Arbeitsfluids, nachdem er den Verdampfer passiert hat, wobei ein Ausstoßauslass des Verdichters mit einem Ausstoßauslass der ersten Expansionsturbine verbunden ist, sodass der zweite Anteil des Arbeitsfluids und das Gas, das aus der ersten Expansionsturbine ausgestoßen wird, kombiniert und in den ersten Zwischenüberhitzer geleitet werden, um unter Verwendung der Wärme aus der Umgebung oder aus Abwärme zwischenüberhitzt zu werden,
einen Generator,
wobei mindestens eine der ersten und der zweiten Expansionsturbine dazu gestaltet ist, den Generator anzutreiben, um Elektrizität zu produzieren.

2. Vorrichtung nach Anspruch 1, wobei die Fluidpumpe zum Verdichten des kryogenen Fluids auf einen Druck von mindestens 50 Bar dient.

3. Vorrichtung nach einem vorhergehenden Anspruch, ferner einen Überhitzer (430) zum Erhitzen des Hochdruck-Arbeitsfluids, das von dem Verdampfer ausgegeben wird, auf eine hohe Temperatur unter Verwendung einer Wärmequelle von einem am gleichen Ort befindlichen Prozess umfassend.

4. Vorrichtung nach Anspruch 3, wobei die am gleichen Ort befindliche Wärmequelle die Umgebung, die Atmosphäre, der Boden, Fluss-, Meeres- oder Seewasser oder Abwärme von einem Kraftwerk oder einer Industrieanlage ist.

5. Vorrichtung nach einem vorhergehenden Anspruch, wobei die erste Expansionsturbine auf derselben Hauptwelle montiert ist wie der erste Verdichter.

6. Vorrichtung nach vorhergehenden Ansprüchen, ferner umfassend:
eine dritte Expansionsturbine (441) und einen zweiten Zwischenüberhitzer (451), die zwischen dem Verdampfer und der ersten Expansionsturbine angeordnet sind, und
eine vierte Expansionsturbine (461) und einen dritten Zwischenüberhitzer (453), die zwischen dem ersten Zwischenüberhitzer und der zweiten Expansionsturbine angeordnet sind.

7. Vorrichtung nach Anspruch 6, wobei die erste und die dritte Expansionsturbine auf derselben Hauptwelle montiert ist wie der erste Verdichter.

8. Vorrichtung nach Anspruch 7, ferner einen zweiten Verdichter (472) umfassend zum Verdichten des zweiten Anteils des Arbeitsfluids, nachdem es den Verdampfer ein erstes Mal passiert hat, und zum Leiten des zweiten Anteils des Arbeitsfluids ein zweites Mal zurück durch den Verdampfer, bevor es durch den ersten Verdichter verdichtet wird, und optional wobei die erste und die dritte Expansionsturbine auf derselben Hauptwelle montiert sind wie der erste und der zweite Verdichter.

9. System zur Speicherung kryogener Energie mit einer Leistungsrückgewinnungskomponente, die die Vorrichtung nach einem vorhergehenden Anspruch umfasst.

10. Verfahren zum Erzeugen von Elektrizität, umfassend:
Speichern eines kryogenen Fluids in einem Speichertank (400),
Extrahieren des kryogenen Fluids aus dem Speichertank und Verdichten des kryogenen Fluids auf einen hohen Druck unter Verwendung einer Fluidpumpe (410),
Verdampfen des unter hohem Druck stehenden kryogenen Fluids in einem Verdampfer (420), um ein Hochdruckgas bereitzustellen,
Expandieren des Hochdruckgases unter Verwendung einer ersten Expansionsturbine (440) und Extrahieren von Arbeit aus dem Hochdruckgas,
Zwischenüberhitzen des Gases, das aus der ersten Expansionsturbine ausgestoßen wird, unter Verwendung eines ersten Zwischenüberhitzers (450) und von Wärme aus der Umgebung oder aus Abwärme,
Expandieren des Arbeitsfluids, das aus dem ersten Zwischenüberhitzer ausgestoßen wird, und Extrahieren von Arbeit aus dem Arbeitsfluid, das aus dem ersten Zwischenüberhitzer ausgestoßen wird, unter Verwendung einer zweiten Expansionsturbine (460), wobei
die zweite Expansionsturbine einen Ausstoßauslass aufweist, der in einen ersten und einen zweiten Weg unterteilt ist, sodass das Arbeitsfluid, das aus der ersten Expansionsturbine ausgestoßen wird, in einen ersten und einen zweiten Anteil geteilt wird, wobei
der erste Anteil des Arbeitsfluids entlang des ersten Weges durch einen ersten Ausstoßkanal (490) in die Umgebung geleitet wird und der zweite Anteil des Arbeitsfluids entlang des zweiten Weges zu einem Einlass des Verdampfers geleitet wird, sodass der zweite Anteil des Arbeitsfluids thermische Energie mit dem unter hohem Druck stehenden kryogenen Fluid in dem Verdampfer austauscht,
Verwenden eines ersten Verdichters (470) zum Verdichten des zweiten Anteils des Arbeitsfluids, nachdem er den Verdampfer passiert hat, wobei ein Ausstoßauslass des Verdichters mit einem Ausstoßauslass der ersten Expansionsturbine verbunden ist, sodass der zweite Anteil des Arbeitsfluids und das Gas, das aus der ersten Expansionsturbine ausgestoßen wird, kombiniert werden und in den ersten Zwischenüberhitzer geleitet werden, um unter Verwendung der Wärme aus der Umgebung oder aus Abwärme zwischenüberhitzt zu werden, und
Verwenden mindestens einer der ersten und der zweiten Expansionsturbine, um einen Generator anzutreiben und Elektrizität zu produzieren.

11. Verfahren nach Anspruch 10, ferner das Verwenden eines Überhitzers (430) und einer Wärmequelle von einem am gleichen Ort befindlichen Prozess umfassend, um das Hochdruck-Arbeitsfluid, das von dem Verdampfer ausgegeben wird, auf eine hohe Temperatur zu erhitzen.

12. Verfahren nach Anspruch 10 oder 11, ferner umfassend:
Expandieren des Hochdruckgases unter Verwendung einer dritten Expansionsturbine (441),
Zwischenüberhitzen des Gases, das aus der dritten Expansionsturbine ausgestoßen wird, unter Verwendung eines zweiten Zwischenüberhitzers (451) und
Expandieren des Arbeitsfluids, das aus dem ersten Zwischenüberhitzer ausgestoßen wird, unter Verwendung einer vierten Expansionsturbine, und
Zwischenüberhitzen des Gases, das aus der vierten Expansionsturbine ausgestoßen wird, unter Verwendung eines dritten Zwischenüberhitzers.

13. Verfahren nach einem der Ansprüche 10 bis 12, ferner das Verwenden eines zweiten Verdichters umfassend, um den zweiten Anteil des Arbeitsfluids zu verdichten, nachdem er den Verdampfer ein erstes Mal passiert hat, und um den zweiten Anteil des Arbeitsfluids ein zweites Mal zurück durch den Verdampfer zu leiten, bevor er durch den ersten Verdichter verdichtet wird.

## Revendications

1. Dispositif de production d'électricité comprenant:
un réservoir de stockage (400) pour stocker un fluide cryogénique,
une pompe à fluide (410) pour comprimer le fluide cryogénique prélevé dans le réservoir de stockage à une pression élevée,
un évaporateur (420) pour évaporer le fluide cryogénique à haute pression, pour fournir un gaz à haute pression,
une première turbine de détente (440, 442) pour l'expansion du gaz à haute pression et l'extraction d'un travail à partir du gaz à haute pression;
un premier réchauffeur (450, 452) pour réchauffer le gaz évacué de la première turbine de détente en utilisant la chaleur du milieu ambiant ou la chaleur résiduelle;
une deuxième turbine de détente (460, 462) pour l'expansion du fluide de travail évacué du premier réchauffeur et extraire le travail du fluide de travail évacué du premier réchauffeur;
dans lequel
la deuxième turbine de détente a une sortie d'échappement qui est divisée en première et seconde voies de sorte que le fluide de travail évacué de la deuxième turbine de détente est divisé en première et seconde parties, la première partie du fluide de travail étant dirigée le long de la première voie vers l'environnement par un premier échappement (490), et la seconde partie du fluide de travail étant dirigée le long de la seconde voie vers une entrée de l'évaporateur, de sorte que la seconde partie du fluide de travail échange une énergie thermique avec le fluide cryogénique à haute pression dans l'évaporateur; et
un premier compresseur (470) pour comprimer la seconde partie du fluide de travail après son passage à travers l'évaporateur, dans lequel une sortie d'échappement du compresseur est reliée à une sortie d'échappement de la première turbine de détente de sorte que la seconde partie du fluide de travail et le gaz évacué par la première turbine de détente sont combinés et dirigés vers le premier réchauffeur pour être réchauffés en utilisant la chaleur du milieu ambiant ou la chaleur résiduelle,
un générateur,
au moins l'une des première et deuxième turbines de détente étant configurée pour entraîner ledit générateur pour produire de l'électricité.

2. Dispositif selon la revendication 1, dans lequel la pompe à fluide est destinée à comprimer le fluide cryogénique à une pression d'au moins 50 bars.

3. Dispositif selon l'une quelconque des revendications précédentes, comprenant en outre un surchauffeur (430) pour chauffer le fluide de travail à haute pression sortant de l'évaporateur à une température élevée en utilisant une source de chaleur provenant d'un procédé colocalisé.

4. Dispositif selon la revendication 3, dans lequel la source de chaleur colocalisée est l'environnement ambiant, l'atmosphère, le sol, l'eau de rivière, de mer ou de lac, ou la chaleur résiduelle d'une centrale électrique ou d'une installation industrielle.

5. Dispositif selon l'une quelconque des revendications précédentes, dans lequel la première turbine de détente est montée sur le même arbre moteur que le premier compresseur.

6. Dispositif selon l'une quelconque des revendications précédentes, comprenant en outre:
une troisième turbine de détente (441) et un deuxième réchauffeur (451) placés entre l'évaporateur et la première turbine de détente, et
une quatrième turbine de détente (461) et un troisième réchauffeur (453) placés entre le premier réchauffeur et la deuxième turbine de détente.

7. Dispositif selon la revendication 6, dans lequel les première et troisième turbines de détente sont montées sur le même arbre moteur que le premier compresseur.

8. Dispositif selon la revendication 7, comprenant en outre un second compresseur (472) pour comprimer la seconde partie de fluide de travail après son passage dans l'évaporateur une première fois et renvoyer la seconde partie de fluide de travail à travers l'évaporateur une seconde fois avant sa compression par le premier compresseur, et éventuellement dans lequel les première et troisième turbines de détente sont montées sur le même arbre moteur que les premier et second compresseurs.

9. Système de stockage d'énergie cryogénique ayant un composant de récupération de puissance comprenant le dispositif selon l'une quelconque des revendications précédentes.

10. Procédé de production d'électricité consistant à:
stocker un fluide cryogénique dans un réservoir de stockage (400);
extraire le fluide cryogénique du réservoir de stockage et comprimer le fluide cryogénique à une pression élevée à l'aide d'une pompe à fluide (410);
évaporer le fluide cryogénique à haute pression dans un évaporateur (420) pour fournir un gaz à haute pression;
étendre le gaz à haute pression à l'aide d'une première turbine de détente (440) et extraire un travail à partir du gaz à haute pression;
réchauffer le gaz évacué de la première turbine de détente à l'aide d'un premier réchauffeur (450) et de la chaleur provenant de l'environnement ambiant ou de la chaleur résiduelle;
étendre le fluide de travail évacué du premier réchauffeur et extraire le travail du fluide de travail évacué du premier réchauffeur en utilisant une deuxième turbine de détente (460); dans lequel
la deuxième turbine de détente a une sortie d'échappement qui est divisée en première et deuxième voies de sorte que le fluide de travail évacué de la deuxième turbine de détente est divisé en première et deuxième parties, où
la première partie de fluide de travail est dirigée le long de la première voie vers l'air ambiant à travers un premier échappement (490), et la seconde partie de fluide de travail est dirigée le long de la seconde voie vers une entrée de l'évaporateur de sorte que la seconde partie de fluide de travail échange de l'énergie thermique avec le fluide cryogénique à haute pression dans l'évaporateur;
utiliser un premier compresseur (470) pour comprimer la seconde partie du fluide de travail après son passage à travers l'évaporateur, dans lequel une sortie d'échappement du compresseur est reliée à une sortie d'échappement de la première turbine de détente de sorte que la seconde partie du fluide de travail et le gaz évacué par la première turbine de détente sont combinés et dirigés vers le premier réchauffeur pour être réchauffés en utilisant la chaleur du milieu ambiant ou la chaleur résiduelle; et
utiliser au moins l'une des première et deuxième turbines de détente pour entraîner un générateur et produire de l'électricité.

11. Procédé selon la revendication 10, comprenant en outre l'utilisation d'un surchauffeur (430) et d'une source de chaleur provenant d'un procédé colocalisé pour chauffer le fluide de travail à haute pression sortant de l'évaporateur à une température élevée.

12. Procédé selon la revendication 10 ou 11, comprenant en outre les étapes consistant à:
étendre le gaz à haute pression à l'aide d'une troisième turbine de détente (441);
réchauffer le gaz évacué de la troisième turbine de détente à l'aide d'un deuxième réchauffeur (451); et
étendre le fluide de travail évacué du premier réchauffeur à l'aide d'une quatrième turbine de détente; et
réchauffer les gaz d'échappement de la quatrième turbine de détente à l'aide d'un troisième réchauffeur.

13. Procédé selon l'une quelconque des revendications 10 à 12, comprenant en outre l'utilisation d'un second compresseur pour comprimer la seconde partie de fluide de travail après son passage dans l'évaporateur une première fois et le renvoi de la seconde partie de fluide de travail dans l'évaporateur une seconde fois avant sa compression par le premier compresseur.
